# EUROPEAN PATENT SPECIFICATION

(11) **EP 3 330 626 B1**
(45) Date of publication and mention of the grant of the patent: **20.11.2019**
(21) Application number: 15899678.5
(22) Date of filing: 30.07.2015
(51) Int. Cl.: F24F 7/08, F24F 12/00, F24F 13/30, F24F 13/24, F28F 9/007

(54) **HEAT EXCHANGE VENTILATION APPARATUS**
WÄRMETAUSCHLÜFTER
APPAREIL DE VENTILATION À ÉCHANGE DE CHALEUR

(43) Date of publication of application: 06.06.2018
(73) Proprietor: Mitsubishi Electric Corporation, Chiyoda-ku Tokyo 100-8310 (JP)
(72) Inventor: SHIOMI, Shinsuke, Tokyo 102-0073 (JP)
(74) Representative: Pfenning, Meinig & Partner mbB
(86) International application number: PCT/JP2015/071693
(87) International publication number: WO 2017/017845

(56) References cited:
- EP-A1- 1 653 187
- EP-A1- 2 314 941
- FR-A1- 2 864 607
- JP-A- H06 207 730
- JP-A- H07 293 960
- JP-A- H10 300 158
- JP-A- 2004 211 957

## Description

### Field

The present invention relates to a heat exchange ventilation apparatus that performs ventilation based on air supply and exhaust while performing heat exchange between supply and exhaust flows.

### Background

A heat exchange ventilation apparatus has a built-in heat exchanger that performs heat exchange from air to air, and performs ventilation by simultaneous air supply and exhaust while performing heat exchange. The heat exchange ventilation apparatus includes an air supply path for introducing outdoor air into a room and an air exhaust path for discharging indoor air to the outside of the room.

The heat exchanger is used together with a pair of filters disposed on upstream sides of the air supply path and the exhaust path. The heat exchanger is relatively frequently attached to and detached from a casing of the heat exchange ventilation apparatus for maintenance of the filters. The heat exchanger is configured to be moved on rails extended along the heat exchanger to be able to be easily attached and detached.

Patent Literature 1 discloses a heat exchange ventilation apparatus in which, in attachment and detachment of a heat exchanger, the heat exchanger can be fit in, attached, and retained along rails for heat exchanger attachment and detachment and the heat exchanger can be pulled out and removed along the rails.

Patent Literature 2 anticipates the features of the preamble of claim 1 and additionally proposes, for separating a supply air passage and an exhaust air passage in a heat exchanger and therearound, flow guides that define gas flow portions in a heat exchange element. Patent Literature 3 concerns a corner profile for air heat treatment units.

### Citation List

### Patent Literature

Patent Literature 1: Japanese Patent Application Laid-Open No. H10-300158
Patent Literature 2: European Patent Application EP 2 314 941 A1
Patent Literature 3: European Patent Application EP 1 653 187 A1

### Summary

### Technical Problem

However, in the invention disclosed in Patent Literature 1 listed above, a gap is necessary between a frame of the heat exchanger and a rail to easily pull out and insert the heat exchanger, thereby causing air leak between air supply and exhaust flows. On the other hand, when the frame of the heat exchanger and the rail are closely attached to suppress the leak, it becomes difficult to pull out and insert the heat exchanger. That is, in the invention disclosed in Patent Literature 1, the easiness of the attachment and detachment of the heat exchanger and the suppression of the air leak between the air supply and exhaust flows have a tradeoff relation therebetween.

The present invention has been devised in view of the above circumstances, and an object of the invention is to provide a heat exchange ventilation apparatus that achieves both of easiness of attachment and detachment of a heat exchanger and suppression of an air leak between air supply and exhaust flows.

### Solution to Problem

In order to solve the above-mentioned problems and achieve the object, the present invention provides a heat exchange ventilation apparatus in accordance with claim 1 comprising: a box body forming a main body outer shell, inside which an air supply path and an exhaust path are formed; an air-supply blower unit to generate an air supply flow in the air supply path; an exhaust blower unit to generate an exhaust flow in the exhaust path; a detachable heat exchanger to perform heat exchange between the air supply flow and the exhaust flow; a supporting member provided inside the box body to support the heat exchanger; and an elastic seal material provided between the supporting member and the box body, wherein the supporting member is set to be movable in a direction in which the supporting member compresses the seal material. The heat exchange ventilation apparatus further comprises a fixing member including a shaft and a restricting portion formed at one end of the shaft to be larger than a through-hole provided in the supporting member, the fixing member being fixed to the box body. The shaft is inserted through the through-hole and the fixing member is fixed to the box body, thereby to movably attach the supporting member to the box body (1) in a state in which the supporting member is prevented from coming off the fixing member by the restricting portion.

### Advantageous Effects of Invention

The heat exchange ventilation apparatus according to the present invention has an advantageous effect that it is possible to achieve both of easiness of attachment and detachment of the heat exchanger and suppression of an air leak between the air supply and exhaust flows.

### Brief Description of Drawings

FIG. 1 is an external perspective view of a heat exchange ventilation apparatus according to a first embodiment of the present invention.
FIG. 2 is a side view of the heat exchange ventilation apparatus according to the first embodiment.
FIG. 3 is a perspective view of a heat exchanger of the heat exchange ventilation apparatus according to the first embodiment.
FIG. 4 is a view showing a state before setting of the heat exchanger of the heat exchange ventilation apparatus according to the first embodiment.
FIG. 5 is a schematic diagram of a heat exchanger rail of the heat exchange ventilation apparatus according to the first embodiment.
FIG. 6 is a side view of the heat exchanger rail of the heat exchange ventilation apparatus according to the first embodiment.
FIG. 7 is a perspective view of the heat exchanger rail of the heat exchange ventilation apparatus according to the first embodiment.
FIG. 8 is a view showing a state of the heat exchanger is of the heat exchange ventilation apparatus according to the first embodiment attached.
FIG. 9 is a front view of an engaging part between the heat exchanger and a casing bottom surface of the heat exchange ventilation apparatus according to the first embodiment.
FIG. 10 is a perspective view of an engaging part beteween the heat exchanger and the casing bottom surface of the heat exchange ventilation apparatus according to the first embodiment.

### Description of Embodiment

A heat exchange ventilation apparatus according to an embodiment of the present invention is described in detail below with reference to the drawings. Note that the present invention is not necessarily limited by the embodiment.

### First Embodiment.

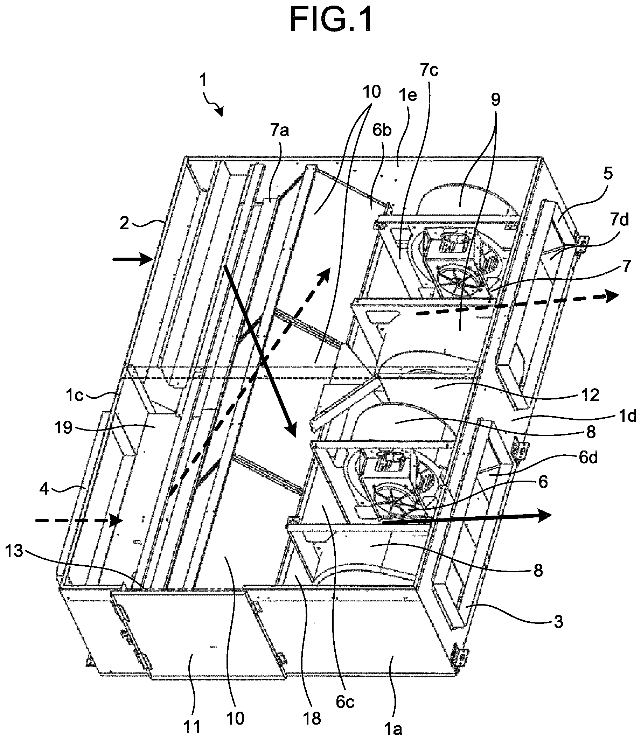

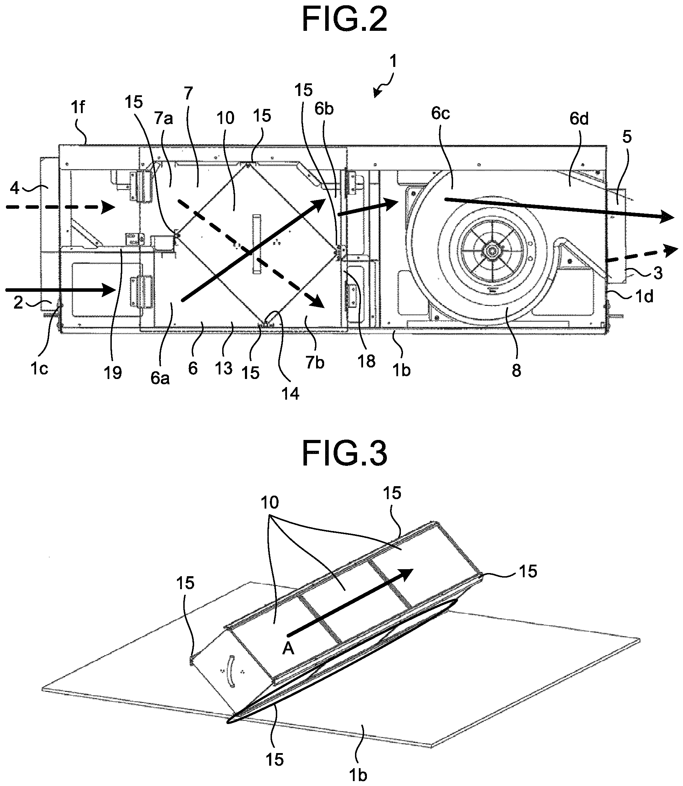

FIG. 1 is an external perspective view of a heat exchange ventilation apparatus according to a first embodiment of the present invention. FIG. 2 is a side view of the heat exchange ventilation apparatus according to the first embodiment. Note that, in FIG. 1, illustration of a casing top panel 1f is omitted and the inside of a casing 1 is shown. In FIG. 2, the inside of the casing 1 is visualized and shown while being seen through a casing side surface 1a and a panel 11 for heat exchanger maintenance. The heat exchange ventilation apparatus includes the casing 1 that forms a box body of the heat exchange ventilation apparatus, a heat exchanger 10 that is provided between an air supply path 6 and an air exhaust path 7 and causes an air supply flow passing through the air supply path 6 and an air exhaust flow passing through the exhaust path 7 to perform heat exchange, an air-supply blower unit 8 that generates the air supply flow, and an exhaust blower unit 9 that generates the exhaust flow. In FIGS. 1 and 2, the air supply flow is indicated by solid line arrows and the exhaust flow is indicated by broken line arrows.

The casing 1 is a box body having a rectangular parallelepiped shape, and includes: the casing side surface 1a in which a heat-exchanger maintenance port 13 for maintenance of the heat exchanger 10 is formed; a casing side surface 1c having an outdoor-side intake port 2 and an indoor-side intake port 4; a casing side surface 1d having an outdoor-side blowout port 5 and an indoor-side blowout port 3; a casing side surface 1e opposed to the casing side surface la; a casing bottom surface 1b forming a bottom surface of the box body; and the casing top panel 1f forming a top surface of the box body. In the casing 1, the air supply path 6 that causes the outdoor-side intake port 2 and the indoor-side blowout port 3 to communicate with each other to supply outdoor air into a room, and the exhaust path 7 that causes the indoor-side intake port 4 and the outdoor-side blowout port 5 to communicate with each other to discharge indoor air to the outside of the room. The air supply path 6 and the air exhaust path 7 are independent from each other over entire routes thereof.

The heat exchanger 10 is disposed closer to the casing side surface 1c. The heat exchanger 10 has a prismatic column shape, and has four ridgelines provided with heat exchanger frames 14. On the other hand, the casing 1 is provided with heat exchanger rails 15 whose sectional shape is concave. The heat exchanger rails 15 are supporting members that support the heat exchanger 10. The heat exchanger 10 is set in a state in which the heat exchanger frames 14 are engaged with recesses formed by the heat exchanger rails 15. That is, cross sections of the heat exchanger rails 15 each have a concave shape with which the heat exchanger frame 14 forming a ridge line of the heat exchanger 10 is engaged.

On the other hand, the air-supply blower unit 8 and the air exhaust blower unit 9 are disposed closer to the casing side surface 1d. The air-supply blower unit 8 is disposed on the casing side surface 1a side and the exhaust blower unit 9 is disposed on the casing side surface 1e side along a longitudinal direction of the heat exchanger 10. The air-supply blower unit 8 and the exhaust blower unit 9 are set on a secondary side of the heat exchanger 10 and suck the air from the heat exchanger 10 out. The air-supply blower unit 8 and the exhaust blower unit 9 are independent from each other, and an air-path partition component 12 isolates the air-supply blower unit 8 from the exhaust blower unit 9 so as not to intersect the air supply path 6 and the exhaust path 7 with each other.

A supply air flow passing through the air supply path 6 flows into the casing 1 from the outdoor-side intake port 2 of the casing side surface 1c. The supply air flow flowing in the casing 1 passes through a pre-heat-exchanger air supply air path 6a, the heat exchanger 10, and a post-heat-exchanger air supply air path 6b and is blown out to the indoor side from the indoor-side blowout port 3 provided in the casing side surface 1d through an air-supply-blower-unit air path 6c before the air-supply blower unit 8 and an air-supply blowout air path 6d after the air-supply blower unit 8. That is, the air supply path 6 is formed by the outdoor-side intake port 2, the pre-heat-exchanger air supply air path 6a, the heat exchanger 10, the post-heat-exchanger air supply air path 6b, the air-supply-blower-unit air path 6c, the air-supply blowout air path 6d, and the indoor-side blowout port 3.

An exhaust flow passing through the exhaust path 7 flows into the casing 1 from the indoor-side intake port 4 of the casing side surface 1c. The exhaust flow flowing in the casing 1 passes through a pre-heat-exchanger exhaust air path 7a, the heat exchanger 10, and a post-heat-exchanger exhaust air path 7b and is blown out to the outdoor side from the outdoor-side blowout port 5 provided in the casing side surface 1d through an exhaust-blower-unit air path 7c before the exhaust blower unit 9 and an exhaust blowout air path 7d after the exhaust blower unit 9. That is, the exhaust path 7 is formed by the indoor-side intake port 4, the pre-heat-exchanger exhaust air path 7a, the heat exchanger 10, the post-heat-exchanger exhaust air path 7b, the exhaust-blower-unit air path 7c, the exhaust blowout air path 7d, and the outdoor-side blowout port 5.

An element rail holder 18 is provided between the air-supply blower unit 8 and exhaust blower unit 9 and the heat exchanger 10. The element rail holder 18 is opened in a portion closer to the casing side surface 1a and closer to the casing top panel 1f and a portion closer to the casing side surface 1e and closer to the casing bottom surface 1b. That is, the element rail holder 18 connects the post-heat-exchanger air supply air path 6b to the air-supply-blower-unit air path 6c and isolates the post-heat-exchanger air supply air path 6b from the exhaust-blower-unit air path 7c. The element rail holder 18 connects the post-heat-exchanger exhaust air path 7b to the exhaust-blower-unit air path 7c and isolates the post-heat-exchanger exhaust air path 7b from the air-supply-blower-unit air path 6c.

Another element rail holder 19 is provided between the outdoor-side intake port 2 and the indoor-side intake port 4. The element rail holder 19 connects the outdoor-side intake port 2 to the pre-heat-exchanger air supply air path 6a and isolates the outdoor-side intake port 2 from the pre-heat-exchanger exhaust air path 7a. The element rail holder 19 connects the indoor-side intake port 4 to the pre-heat-exchanger exhaust air path 7a and isolates the indoor-side intake port 4 from the pre-heat-exchanger air supply air path 6a.

The exhaust flow passes through the heat exchanger 10 from the upper left toward the lower right in FIG. 2. The air supply flow passes through the heat exchanger 10 from the lower left toward the upper right in FIG. 2. The air supply flow and the exhaust flow cross in the heat exchanger 10, whereby heat exchange is performed via partition walls constituting the heat exchanger 10.

During operation of the heat exchange ventilation apparatus, the heat-exchanger maintenance port 13 is closed by the panel 11 for heat exchanger maintenance. The panel 11 for heat exchanger maintenance is in contact with an end face of the heat exchanger 10 to prevent a leak of the air from occurring among the pre-heat-exchanger air supply air path 6a, the post-heat-exchanger air supply air path 6b, the pre-heat-exchanger exhaust path duct 7a, and the post-heat-exchanger exhaust air path 7b around the heat exchanger 10.

Maintenance for the heat exchanger 10 is performed through an inspection port provided in a ceiling plate. The panel 11 for heat exchanger maintenance on the casing side surface 1a is removed, and the heat exchanger 10 is inserted and pulled out from the heat-exchanger maintenance port 13 provided in the casing side surface 1a.

FIG. 3 is a perspective view of the heat exchanger of the heat exchange ventilation apparatus according to the first embodiment. Note that, in FIG. 3, concerning the heat exchanger rails 15 set on the casing top panel 1f and the element rail holders 18 and 19, illustration of the casing top panel 1f and the element rail holders 18 and 19 is omitted. The heat exchanger 10 is slid along the heat exchanger rails 15 in a direction of an arrow A in FIG. 3 to be inserted into the casing 1, and is slid along the heat exchanger rails 15 in a direction opposite to the arrow A to be pulled out from the casing 1. In the following, operations during attachment and detachment of the heat exchanger 10 are explained with reference to the heat exchanger rail 15 set on the casing bottom surface 1b as an example. However, the same applies to the heat exchanger rail 15 set on the casing top panel 1f and the heat exchanger rails 15 set on the element rail holders 18 and 19.

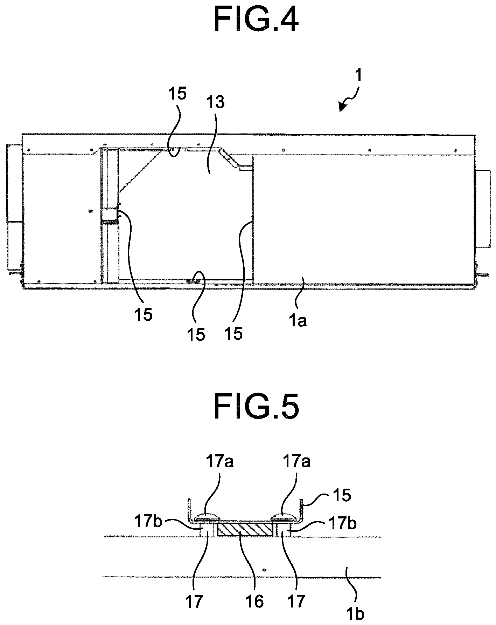

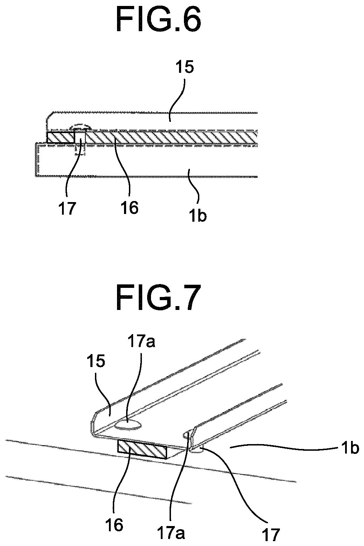

FIG. 4 is a view showing a state before setting of a heat exchanger of the heat exchange ventilation apparatus according to the first embodiment. FIG. 5 is a schematic view of the heat exchanger rail of the heat exchange ventilation apparatus according to the first embodiment. FIG. 6 is a side view of the heat exchanger rail of the heat exchange ventilation apparatus according to the first embodiment. FIG. 7 is a perspective view of the heat exchanger rail of the heat exchange ventilation apparatus according to the first embodiment. The heat exchange ventilation apparatus includes stepped screws 17 that are fixing members fixed to the casing 1, each of which has a shaft 17b and a screw head 17a serving as a restricting portion formed at one end of the shaft with a larger size than a through-hole provided in the heat exchanger rail 15. The shafts 17b are inserted through the through-holes and the stepped screws 17 are fixed to the casing 1, whereby the heat exchanger rail 15 is movably attached to the casing 1 in a state in which the heat exchanger rail 15 is prevented from coming off the stepped screws 17 by the screw heads 17a. The heat exchanger rail 15 is attached to the casing bottom surface 1b via a seal material 16. That is, the seal material 16 is provided on a surface opposite to a surface of the heat exchanger rail 15 in contact with the heat exchanger 10. In a state in which the heat exchanger 10 is not set, the heat exchanger rail 15 is retained in a state in which the heat exchanger rail 15 is in contact with the screw heads 17a of the stepped screws 17 by repulsion of the seal material 16 attached to the heat exchanger rail 15.

The heat exchanger rail 15 is pressed against the screw heads 17a of the stepped screws 17 by the repulsion of the compressed seal material 16, whereby the heat exchanger rail 15 and the casing bottom surface 1b are maintained while keeping an interval with a distance of a step of the stepped screws 17 being used as an upper limit. The heat exchanger rail 15 is movable in the axial direction of the stepped screws 17. When a force directed to the casing bottom surface 1b is applied to the heat exchanger rail 15, if the applied force is larger than the repulsion of the seal material 16, the heat exchanger rail 15 moves to approach the casing bottom surface 1b while compressing the seal material 16.

Note that, although the heat exchanger rail 15 is fixed by the stepped screws 17, an interval between the screw heads 17a and the casing bottom surface 1b is only required to be kept at a fixed interval, and therefore half screws having no steps in shafts 17b can be also used for the fixation.

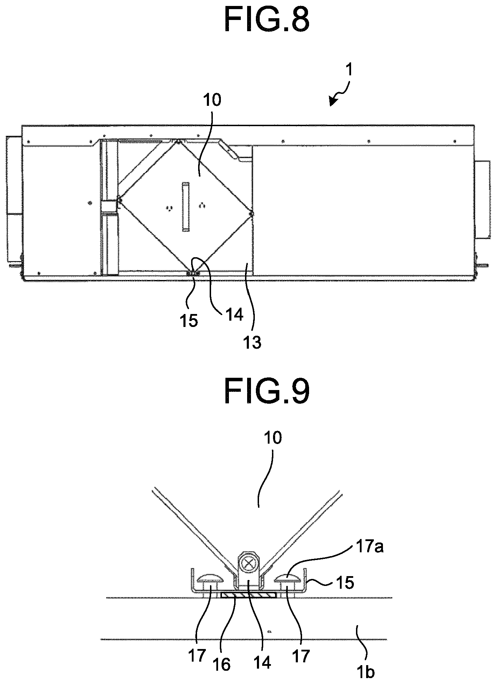

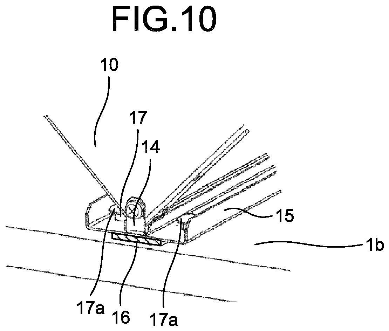

FIG. 8 is a view showing a state in which the heat exchanger is attached for the heat exchange ventilation apparatus according to the first embodiment. FIG. 9 is a front view of an engaging part between the heat exchanger and the casing bottom surface of the heat exchange ventilation apparatus according to the first embodiment. FIG. 10 is a perspective view of the engaging part between the heat exchanger and the casing bottom surface of the heat exchange ventilation apparatus according to the first embodiment. The seal material 16 is attached to the casing bottom surface 1b side of the heat exchanger rail 15. Therefore, when the heat exchanger 10 is inserted and pulled out, the heat exchanger frame 14 is slid on a surface of the heat exchanger rail 15 to which the seal material 16 is not attached and the heat exchanger frame 14.

When the heat exchanger 10 is inserted into the casing 1, the heat exchanger rail 15 is pushed down by the heat exchanger frame 14. When the heat exchanger rail 15 gets away from the screw head 17a and gets close to the casing bottom surface 1b, the seal material 16 is compressed and a gap between the heat exchanger rail 15 and the casing bottom surface 1b becomes narrowed. Therefore, there is no effective gap and a leak of the air does not occur among the heat exchanger frame 14, the heat exchanger rail 15, the seal material 16, and the casing bottom surface 1b. Consequently, it is possible to prevent an air leak between the pre-heat-exchanger air supply air path 6a and the post-heat-exchanger exhaust air path 7b.

The same applies to the heat exchanger rail 15 provided on the casing top panel 1f and the heat exchanger rails 15 provided in the element rail holders 18 and 19. Accordingly, it is also possible to prevent an air leak between the pre-heat-exchanger air supply air path 6a and the pre-heat-exchanger exhaust air path 7a, an air leak between the pre-heat-exchanger exhaust air path 7a and the post-heat-exchanger air supply air path 6b, and an air leak between the post-heat-exchanger air supply air path 6b and the post-heat-exchanger exhaust air path 7b. As explained above, the seal material 16 is set in a boundary between the air supply path 6 and the air exhaust path 7 and isolates the air supply path 6 and the exhaust path 7 from each other.

Note that, by forming the seal material 16 from a material having a high adiabaticity, it is possible to block transformer of heat generated between the air supply and exhaust paths and prevent dew condensation.

As explained above, in the heat exchange ventilation apparatus according to the first embodiment, by making the heat exchanger rails 15 holding the heat exchanger 10 to be movable, and closely attaching the heat exchanger rails 15 to the heat exchanger frames 14, even if variations in size of the heat exchanger 10 are caused, the heat exchanger rails 15 can be closely attached to the heat exchanger frames 14 based on the repulsion force of the seal material 16 according to the variations of the heat exchanger 10. Therefore, it is possible to prevent a leak between the supply air flow and the exhaust flow. In addition, because the heat exchanger rails 15 is made movable in the axial direction of the stepped screws 17, it is possible to easily slide, and pull out and insert the heat exchanger 10 while the heat exchanger frames 14 and the heat exchanger rails 15 remain in contact with each other. Further, because the seal material 16 is not in direct contact with the heat exchanger 14, it is unlikely that the seal material 16 is not damaged when the heat exchanger 10 is pulled out and inserted.

The present invention is defined in the appended claims.

### Reference Signs List

1 casing; 1a, 1c, 1d, 1e casing side surface; 1b casing bottom surface; 1f casing top panel; 2 outdoor-side intake port; 3 indoor-side blowout port; 4 indoor-side intake port; 5 outdoor-side blowout port; 6 air supply path; 6a pre-heat-exchanger air supply air path; 6b post-heat-exchanger air supply air path; 6c air-supply-blower-unit air path; 6d air-supply blowout air path; 7 exhaust path; 7a pre-heat-exchanger exhaust air path; 7b post-heat-exchanger exhaust air path; 7c exhaust-blower-unit air path; 7d exhaust blowout air path; 8 air-supply blower unit; 9 exhaust blower unit; 10 heat exchanger; 11 panel for heat exchanger maintenance; 12 air-path partition component; 13 heat-exchanger maintenance port; 14 heat exchanger frame; 15 heat exchanger rail; 16 seal material; 17 stepped screw; 17a screw head; 17b shaft; 18, 19 element rail holder.

## Claims

1. A heat exchange ventilation apparatus comprising:
a box body (1) forming a main body outer shell, inside which an air supply path (6) and an exhaust path (7) are formed;
an air-supply blower unit (8) to generate an air supply flow in the air supply path (6);
an exhaust blower unit (9) to generate an exhaust flow in the exhaust path (7);
a detachable heat exchanger (10) to perform heat exchange between the air supply flow and the exhaust flow;
a supporting member (15) provided inside the box body (1) to support the heat exchanger (10); and
an elastic seal material (16) provided between the supporting member (15) and the box body (1),
wherein the supporting member (15) is set to be movable in a direction in which the supporting member (15) compresses the seal material (16),
**characterized by** further comprising
a fixing member (17) including a shaft (17b) and a restricting portion (17a) formed at one end of the shaft (17b) to be larger than a through-hole provided in the supporting member (15), the fixing member (17) being fixed to the box body (1),
wherein the shaft (17b) is inserted through the through-hole and the fixing member (17) is fixed to the box body (1), thereby to movably attach the supporting member (15) to the box body (1) in a state in which the supporting member (15) is prevented from coming off the fixing member (17) by the restricting portion (17a).

2. The heat exchange ventilation apparatus according to claim 1, wherein the seal material (16) is set in a boundary between the air supply path (6) and the exhaust path (7), and isolates the air supply path (6) and the exhaust path (7) from each other.

3. The heat exchange ventilation apparatus according to claim 1, wherein the fixing member (17) is a half screw, and the restricting portion (17a) is a screw head.

4. The heat exchange ventilation apparatus according to claim 1, wherein a cross section of the supporting member (15) has a concave shape in which a ridgeline of the heat exchanger (10) is engaged, and the seal material (16) is provided on a surface opposite to a surface of the supporting member (15) in contact with the heat exchanger (10).

5. The heat exchange ventilation apparatus according to any one of claims 1 to 4, wherein the seal material (16) is formed of a material having a high adiabaticity.

## Patentansprüche

1. Wärmetauscher-Belüftungsvorrichtung, umfassend:
ein Kastengehäuse (1), das eine Hauptkörper-Außenschale bildet, in der ein Luftzufuhrweg (6) und ein Abluftweg (7) gebildet werden,
eine Luftzufuhr-Gebläseeinheit (8) zum Erzeugen eines Luftzufuhrstroms im Luftzufuhrweg (6);
eine Abluftgebläseeinheit (9) zum Erzeugen eines Abluftstroms im Abluftweg (7);
einen lösbaren Wärmetauscher (10) zum Durchführen von Wärmeaustausch zwischen dem Luftzufuhrstrom und dem Abluftstrom;
ein Stützelement (15), das zum Stützen des Wärmetauschers (10) im Kastengehäuse (1) vorgesehen ist und
ein elastisches Dichtungsmaterial (16), das zwischen dem Stützelement (15) und dem Kastengehäuse (1) vorgesehen ist,
wobei das Stützelement (15) eingerichtet ist, in eine Richtung bewegbar zu sein, in der das Stützelement (15) das Dichtungsmaterial (16) komprimiert,
**dadurch gekennzeichnet, dass** sie ferner umfasst:
ein Befestigungselement (17) mit einem Schaft (17b) und einem Begrenzteil (17a), das an einem Ende des Schafts (17b) ausgebildet ist, größer als ein am Stützelement (15) vorgesehenes Durchgangsloch zu sein, wobei das Befestigungselement (17) am Kastengehäuse (1) befestigt ist,
wobei der Schaft (17b) durch das Durchgangsloch eingeführt wird und das Befestigungselement (17) am Kastengehäuse (1) befestigt ist, wodurch es das Stützelement (15) in einem Zustand, in dem durch den Begrenzteil (17a) ein Lösen des Stützelements (15) vom Befestigungselement (17) verhindert ist, beweglich am Kastengehäuse (1) befestigt.

2. Wärmetauscher-Belüftungsvorrichtung nach Anspruch 1, bei dem das Dichtungsmaterial (16) in einer Grenzfläche zwischen dem Luftzufuhrweg (6) und dem Abluftweg (7) eingesetzt ist und den Luftzufuhrweg (6) und den Abluftweg (7) voneinander isoliert.

3. Wärmetauscher-Belüftungsvorrichtung nach Anspruch 1, bei dem das Befestigungselement (17) eine Stufenschraube und der Begrenzteil (17a) ein Schraubenkopf ist.

4. Wärmetauscher-Belüftungsvorrichtung nach Anspruch 1, bei dem ein Querschnitt des Stützelements (15) eine konkave Form aufweist, mit der eine Längskante des Wärmetausches (10) in Eingriff steht, und das Dichtungsmaterial (16) an einer Oberfläche gegenüber einer Oberfläche des Stützelements (15), die den Wärmetauscher (10) berührt, vorgesehen ist.

5. Wärmetauscher-Belüftungsvorrichtung nach einem der Ansprüche 1 bis 4, wobei das Dichtungsmaterial (16) aus einem Material mit einer hohen Adiabatizität gebildet ist.

## Revendications

1. Appareil de ventilation à échange de chaleur comprenant :
un corps de boîte (1) formant une coque externe de corps principal, à l'intérieur duquel une trajectoire d'alimentation en air (6) et une trajectoire d'échappement (7) sont formées ;
une unité de soufflante d'alimentation en air (8) afin de générer un écoulement d'alimentation en air dans la trajectoire d'alimentation en air (6) ;
une unité de soufflante d'échappement (9) afin de générer un écoulement d'échappement dans la trajectoire d'échappement (7) ;
un échangeur de chaleur détachable (10) pour réaliser l'échange de chaleur entre l'écoulement d'alimentation en air et l'écoulement d'échappement ;
un élément de support (15) prévu à l'intérieur du corps de boîte (1) afin de supporter l'échangeur de chaleur (10) ; et
un matériau de joint d'étanchéité élastique (16) prévu entre l'élément de support (15) et le corps de boîte (1),
dans lequel l'élément de support (15) est déterminé pour être mobile dans une direction dans laquelle l'élément de support (15) comprime le matériau de joint d'étanchéité (16),
**caractérisé en ce qu'**il comprend en outre :
un élément de fixation (17) comprenant un arbre (17b) et une partie de restriction (17a) formée au niveau d'une extrémité de l'arbre (17b) pour être supérieur à un trou débouchant prévu dans l'élément de support (15), l'élément de fixation (17) étant fixé sur le corps de boîte (1),
dans lequel l'arbre (17b) est inséré à travers le trou débouchant et l'élément de fixation (17) est fixé sur le corps de boîte (1), afin de fixer, de manière mobile, l'élément de support (15) au corps de boîte (1) dans un état dans lequel on empêche l'élément de support (15) de sortir de l'élément de fixation (17) grâce à la partie de restriction (17a).

2. Appareil de ventilation à échange de chaleur selon la revendication 1, dans lequel le matériau de joint d'étanchéité (16) est placé dans une limite entre la trajectoire d'alimentation en air (6) et la trajectoire d'échappement (7), et isole la trajectoire d'alimentation en air (6) et la trajectoire d'échappement (7) l'une de l'autre.

3. Appareil de ventilation à échange de chaleur selon la revendication 1, dans lequel l'élément de fixation (17) est une demi-vis et la partie de restriction (17a) est une tête de vis.

4. Appareil de ventilation à échange de chaleur selon la revendication 1, dans lequel une section transversale de l'élément de support (15) a une forme concave dans laquelle une ligne de crête de l'échangeur de chaleur (10) est mise en prise, et le matériau de joint d'étanchéité (16) est prévu sur une surface opposée à une surface de l'élément de support (15) en contact avec l'échangeur de chaleur (10).

5. Appareil de ventilation à échange de chaleur selon l'une quelconque des revendications 1 à 4, dans lequel le matériau de joint d'étanchéité (16) est formé avec un matériau ayant une adiabaticité élevée.
